# EUROPEAN PATENT SPECIFICATION

(11) **EP 3 367 018 B1**
(45) Date of publication and mention of the grant of the patent: **19.02.2020**
(21) Application number: 18159006.8
(22) Date of filing: 27.02.2018
(51) Int. Cl.: F24S 10/75, F24S 80/30, F24S 80/60, F24S 25/20, H02S 30/10, H02S 20/23, H02S 40/44, F24S 25/61, F24S 25/67

(54) **MODULAR PANEL FOR MAKING COVERING STRUCTURES**
MODULARE PLATTE ZUR HERSTELLUNG VON ABDECKSTRUKTUREN
PANNEAU MODULAIRE POUR LA RÉALISATION DE STRUCTURES DE RECOUVREMENT

(30) Priority: 27.02.2017 IT 201700021752
(43) Date of publication of application: 29.08.2018
(73) Proprietor: Mas Roof S.R.L., 31046 Oderzo (TV) (IT)
(72) Inventor: Damo, Mario, 31045 Motta di Livenza (TV) (IT)
(74) Representative: Petraz, Gilberto Luigi

(56) References cited:
- WO-A2-2010/150086
- FR-A1- 2 558 577
- GB-A- 2 161 917
- US-A- 4 172 311
- US-A- 4 215 677

## Description

### FIELD OF THE INVENTION

The present invention concerns a modular panel for the construction of covering structures, such as for example the roofs of buildings, or for the construction of walls, such as perimeter walls of a building, able to integrate inside it surfaces and panels to capture and convert solar energy.

In particular, the present invention is preferably applied in the building trade to make a closed environment or room, acoustically and/or heat insulated, in a context of maximum possible use of clean and/or alternative and/or renewable energy.

The present invention also concerns a structure, such as for example a covering structure or a wall of a building, of the modular type and consisting of a plurality of panels according to the invention, functionally and mechanically connected to one another.

### BACKGROUND OF THE INVENTION

It is known that there is a strongly felt need to use alternative and/or renewable energy sources, to complement traditional sources of energy production, especially due to the ever-increasing attention paid to reducing the atmospheric pollution caused by the use of such sources, as well as to make their exploitation less intensive.

In this context, solutions are known that provide to install, on the covering structures of building works, additional structures, such as, for example, solar or photovoltaic cells or panels, able to exploit the radiant energy of the sun to generate, respectively, heat or electric energy.

In known solutions, the covering structure of the buildings normally consists of covering elements, for example tiles, panels, slabs or suchlike, which need to be supported by bearing structures comprising, for example, beams and purlins. This has a negative effect on the time and costs of construction of the covering structures, which are high, as well as on the complexity of the construction of the covering structure itself.

In known solutions, modular thermal solar panels with a capturing surface are generally made using various techniques, for example roll bonds or copper tubes welded on pigmented metal sheet. One disadvantage of these solutions is connected to the cost, the difficulty of modifying the shape in a simple manner, or the overall size of the thermal solar panel to be made, and to the need to be installed on additional structures.

With regard to hybrid type modular panels, that is, comprising both a thermal solar panel and a photovoltaic panel, in known solutions they are made by gluing the hydraulic circuit with the back of the photovoltaic surface, by means of glues or adhesives made of conductive material.

A first disadvantage of the state of the art therefore consists in the great bulk of the additional structures, also entailing a certain complexity and difficulty in integrating them with the part of the covering structure that already exists.

Another disadvantage consists, generally, in the lack of structural and functional connection between the covering elements of the covering structures.

Another disadvantage derives from the use, in general, of materials with poor ability to absorb the elastic energy, with consequent weak anti-seismic characteristics, possibly to be improved with additional expedients that are equally burdensome both in terms of time and cost.

A modular panel is known from the patent application PCT/IB2010/001529, to make a covering structure or a wall of an environment, comprising an external shell and an internal shell made of moldable plastic material. This modular panel integrates energy capture and radiation means, associated with the external shell, and corresponding energy accumulation means, disposed in the volume defined between the external shell and the internal shell. Means for conditioning the environment are associated with the internal shell, that is, facing the internal environment.

This known modular panel, after the coupling between the internal shell and external shell, assumes a structural rigidity which gives it self-supporting characteristics, even in the possible presence of non-load-bearing and/or completion elements, so as not to require auxiliary support and stiffening means.

One disadvantage of this known modular panel consists in the complexity due to the presence of two shells to be coupled in the single panel and to the system for connecting a plurality of panels to form a covering structure. There is also the complexity of the disposition of fluid and electric connections corresponding to one or more panels.

This disadvantage involves difficulties in the assembly procedure of the panels to make the covering structures. Furthermore, this configuration defines a permanent, or at least non-modifiable, disposition of the final covering structure.

Moreover, the known solution for making the shells requires specific molds, which can be complex to produce, and do not allow to modify in a simple way the shape, or the overall size of the modular panels to be produced.

One disadvantage of this known modular panel consists in the choice of the plastic material which, since it is a material of relatively recent use, does not have a reliable history such as to guarantee the mechanical endurance for several years, for example more than twenty. The same plastic material does not guarantee the fire resistance required by the certifications for the internal part and requires the modular panel to be equipped with a lower shield, with additional elements not integrated into the solution.

Other modular panels are known from documents US-A-4.215.677, FR-A-2.558.577, GB-A-2.161.917 and US-A-4.172.311.

One purpose of the present invention is to provide a modular panel for covering structures and walls able to integrate means to exploit alternative and/or renewable energy, with a simplified configuration and such as to facilitate the assembly, disassembly and maintenance of the covering structure itself, reducing to a minimum the auxiliary support elements.

Another purpose of the present invention is to provide a modular panel which can be modified with minimum strategies to exploit both heat energy and electric energy deriving from solar energy.

Furthermore, another purpose of the present invention is to provide a modular panel which can be made with different shapes or sizes with minor modifications of the components.

Another purpose of the present invention is to provide a modular panel and a corresponding covering structure consisting of a plurality of said panels, which is self-supporting, that is, without requiring substantial support structures, at the same time obtaining a reduction in the construction times and costs, as well as guaranteeing great structural strength and resistance to loads.

Another purpose of the present invention is to provide a covering structure that is fire-resistant without needing to associate it with fire-proof panels such as for example false ceilings made of rock wool or suchlike.

Another purpose of the present invention is to optimize operations and interventions on the electric, fluidic and possibly other equipment (optical fibers, pipes for alarm systems, etc.), reducing time and costs and facilitating access for maintenance personnel to the intervention zones.

Another purpose of the present invention is to define a thermal solar panel which is easy to modify in its shape and size, with a cost and a number of workings much lower than the current solutions present on the market and which allows high circuit flow rates.

Another purpose of the present invention is to define a hybrid panel which is easy to manufacture and install.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a modular panel according to the present invention comprises a base body on which are installed at least one of either a glass panel or a thermal solar panel provided with a capturing surface and a hydraulic circuit inside which a heat-carrier fluid flows, and a photovoltaic panel provided with an electric circuit suitable to absorb solar energy and convert it into electric energy.

According to some embodiments, the modular panel can therefore be either only the thermal solar type, when there is only the thermal solar panel present, or the photovoltaic type, when there is only the photovoltaic panel present, or the hybrid type when there is both the thermal solar panel and the photovoltaic panel present.

The base body comprises at least a lower shell profile, or lower shell frame, and an upper profile, or upper frame, shaped like a frame, and associated with each other to define a support structure of the modular panel.

During use, the upper frame is installed above the lower shell frame.

The coupling of said upper frame and said lower shell frame defines an internal volume where the thermal solar panel and/or the photovoltaic panel are disposed.

The lower shell frame and the upper frame each comprise a plurality of respective profiled segments.

According to some embodiments, the profiled segments can be connected to each other by welding or by connection elements, for example in correspondence with the corners. The segmented configuration of the profiled elements allows to assemble the individual modular panels simply and quickly, since their production can be varied with a few modifications depending on the size desired.

The base body also comprises two metal sheets supported by and respectively connected to the lower shell frame and the upper frame, defining between them a first chamber suitable to contain inside it at least a filling element with an insulating function.

According to some embodiments, the filling element can be made of expanded polyurethane, by means of foaming. In this way it can also perform the function of a structural glue between the parts that make up the base body.

According to some embodiments of the invention, the lower shell frame is suitable to cooperate with structural connection means configured to connect the modular panel to one or more adjacent modular panels.

The lower shell frame is also suitable to cooperate with circuit connection means for the hydraulic circuit and the electric circuit.

The upper frame can also be conformed so as to support a photovoltaic panel, or a glass panel, as a function of the type of modular panel to be obtained.

This allows to define a second chamber between the photovoltaic panel, or glass panel, and the upper metal sheet, suitable to contain at least the thermal solar panel.

In accordance with some embodiments, between the lower shell frame and the upper frame an intermediate profile is provided, made of plastic material, configured to act as insulation between the outside and inside of the modular panel, and absorb the thermal expansions of the lower shell frame and the upper frame.

According to some embodiments, the thermal solar panel can also be the modular type, so as to be able to obtain simply and quickly the desired size. According to possible solutions, the thermal solar panel can include a plurality of joining capturing profiles disposed aligned with each other, each provided with its own tubular cavity through which the heat-carrier fluid circulates.

According to some embodiments, the metal sheets, the filling element and the base body are provided with slits, or through holes, passed through by connection pipes through which the cables of the electric circuit of the photovoltaic panel can be inserted, or the pipes of the hydraulic circuit of the thermal solar panel.

The modular panel is also provided with structural connection means and circuit connection means to create a covering structure comprising a plurality of modular panels attached to each other, and with shared hydraulic and electric circuits.

The structural connection means can comprise connection plates provided with holes that can align with holes provided on the base body. Connection pipes can be introduced into the holes, in which the cables for the electric connection can be made to pass. Packings are also provided above the modular panels, cooperating with the respective upper profiles, to hermetically close the modular panels.

The packings can also be used in cooperation with lateral and corner closing elements, to hermetically close the lateral surface of the modular panels, or to associate other functional elements such as, for example, drainpipes.

According to some embodiments, the lower shell frame allows to assemble protective covers on it, which hide, insulate and protect the circuit connection means, the structural connection means, as well as adjacent points between modular panels. The covers can be used so as to insert functional elements inside them, for example lights, conditioning elements, fire extinguisher elements and suchlike.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a schematized three-dimensional view of a building comprising a covering structure according to the present invention;
- fig. 2 is an exploded three-dimensional view of a modular panel 10 according to some embodiments;
- fig. 3 is a three-dimensional view of the base body of a modular panel according to the invention;
- figs. 3a, 3b show enlarged details of fig. 3;
- fig. 3c is an exploded view of a detail of the base body of fig. 2;
- fig. 4 is an exploded three-dimensional view of a hybrid modular panel according to the invention;
- fig. 4a is an enlarged detail of fig. 4;
- fig. 5 is a view from below of the hybrid modular panel of fig. 4;
- fig. 5a is an enlarged detail of fig. 5;
- fig. 6 is a three-dimensional view of the connection zone between two modular panels;
- fig. 7 is a section view of the joining zone between the two modular panels;
- fig. 8 is a three-dimensional view from below of the joining zone between modular panels with respective hydraulic connection elements;
- fig. 9 is a three-dimensional view of the joining zone between two modular panels with respective mechanical connection elements;
- fig. 10 is a partly sectioned view of the joining zone between two modular panels;
- fig. 11 is a view of the joining zone between panels with respective packing elements.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

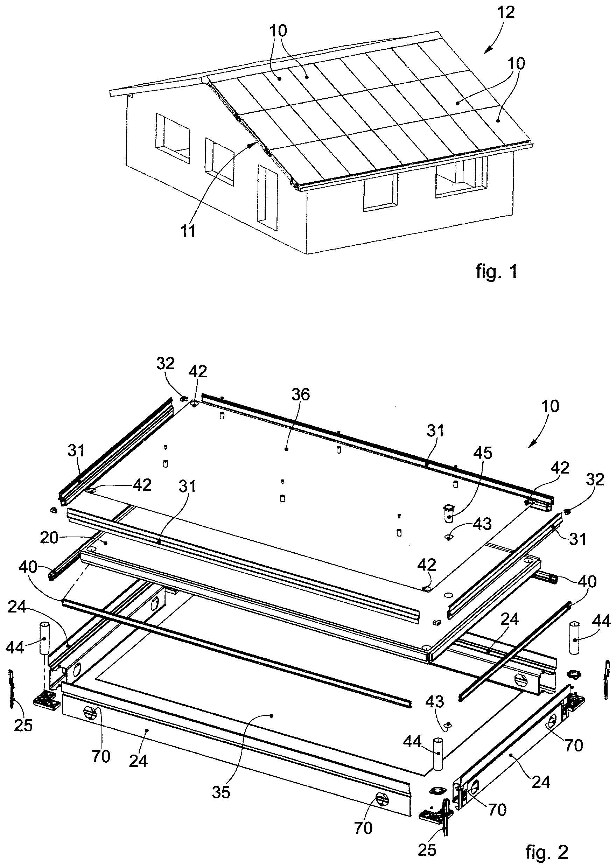

With reference to fig. 1, a covering structure 11 of a building 12 is shown which, in this case, can be a house or a small industrial-type construction, comprising a plurality of modular panels 10 according to the invention, disposed adjacent to one another, to form a self-supporting structure.

According to some embodiments, the covering structure 11 can be, for example, the sloping or curved type, which in one case provides the modular panels 10 disposed on the same lying plane, and in the other case disposed inclined and angled with respect to each other according to a defined radius of curvature.

According to the embodiments shown by way of example, the modular panels 10 can have a rectangular shape, but this does not exclude the possibility that they can be made in any other geometric shape.

In accordance with embodiments described with reference to the attached drawings, each modular panel 10 comprises a base body 14 configured to confer self-supporting characteristics on the modular panel 10, which is suitable to support loads and stresses.

The modular panel 10 also comprises, installed inside the base body, at least one of either a glass 19 or a thermal solar panel 16 suitable to absorb heat, and a photovoltaic panel 18 suitable to absorb solar energy.

The thermal solar panel 16 is connected to a hydraulic circuit 15 in which a heat-carrier fluid flows which recovers the heat absorbed by the capturing surfaces of the thermal solar panel 16.

The photovoltaic panel 18 is connected to an electric circuit 17 configured to convert the solar energy absorbed by the photovoltaic panel into electric energy.

In accordance with preferred embodiments, the modular panel 10 comprises both the thermal solar panel 16 and also the photovoltaic module 18, thus forming a hybrid modular panel 10 suitable to absorb both heat and solar energy, in order to obtain respectively hot water and electric energy.

The modular panel 10 can also comprise one or more glass panels 19.

In accordance with other embodiments, the modular panel 10 can comprise one or more filling elements 20, with the function of insulating the internal environment from the external environment of the modular panel 10, and therefore insulating the building 12.

According to some embodiments, the base body 14 comprises at least one shell profile, or lower shell frame 22, and an upper profile or frame 23, both frame-shaped, which are associated with each other to define a support structure for the modular panel 10, inside which the thermal solar panel 16 and/or the photovoltaic panel 18 are disposed.

According to some embodiments, the base body 14 has a box-like structure, of which the profile, or lower shell frame 22 and the profile, or upper frame 23 define respective perimeter portions.

According to some embodiments, the lower shell frame 22 can be made with an aluminum extrusion die.

According to some embodiments, the lower shell frame 22 has a box-like portion 22a, which defines a housing for the components of the hydraulic circuit 15 and/or electric circuit 17, and an upper edge 22b which extends above the box-like portion 22a. According to some embodiments, the lower shell frame 22 also comprises a lower edge 22c which extends from the internal lower edge of the box-like portion 22a which defines an attachment for possible lower protective covering structure components 115.

According to some embodiments, the lower shell frame 22 is also suitable to cooperate with circuit connection means 29 through which the hydraulic circuit 15 connects different modular panels 10 with each other.

When two modular panels 10 are put adjacent to each other, the respective upper edges 22b can be put in contact with each other, while the respective box-like portions 22a are slightly distanced from each other, thus defining housing seatings 27 suitable to cooperate with structural connection means 28 to reciprocally connect and clamp the two modular panels 10 to each other. According to some embodiments, other intermediate elements 71 can be disposed in the housing seatings 27 which define or increase the support surface between the modular panels 10.

According to some embodiments, the lower shell frame 22 can be formed by a plurality of first profiled segments 24 connected to each other by means of suitable angular connectors 25, for example in correspondence with the edges of the modular panel 10.

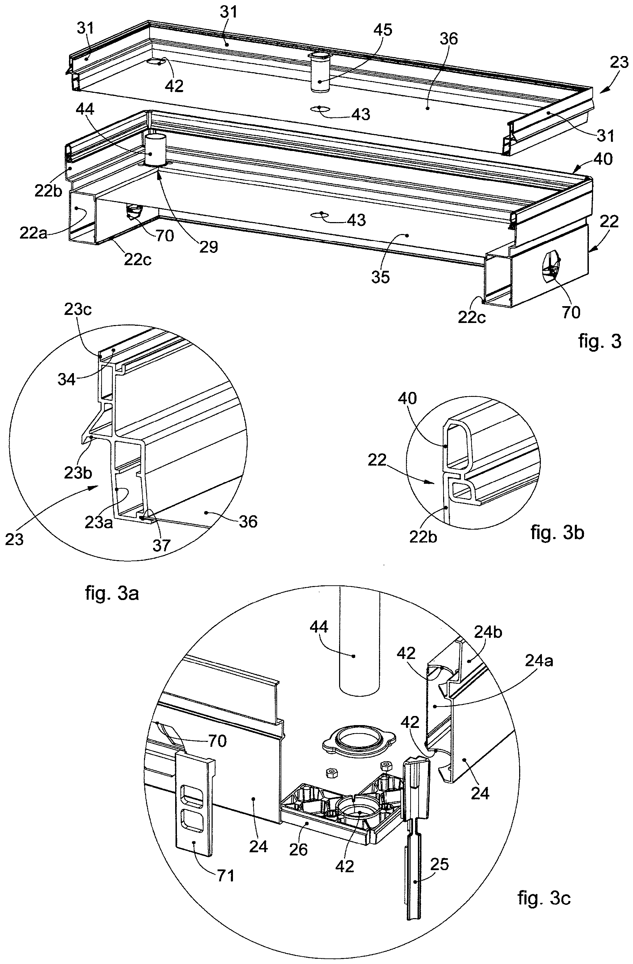

According to embodiments described with reference to fig. 3c, a structural angular element 26 can also be provided, positioned inside the box-like portion 22a.

In accordance with possible solutions, the structural angular element 26 can be made of a polymer material, for example polybutylene terephthalate (PBT), possibly reinforced with glass fiber so as to support high temperatures, to increase the self-supporting characteristics of the modular panel 10 and to confer stability and resistance to stresses on the lower shell frame 22, and therefore on the base body 14.

According to some embodiments, the angular connectors 25 can also be made of polymer material, so as to close the profiled segments 24 and interrupt the thermal bridge between the elements, even in the corner position.

According to some embodiments, the upper frame 23 can comprise a box-like portion 23a, a lateral edge 23b protruding toward the outside, and an upper edge 23c.

When two modular panels 10 are put adjacent to each other, the respective lateral edges 23b and upper edges 23c of the two modular panels 10 define between them a housing compartment 33, in which packing means 82 described below can be inserted.

According to advantageous embodiments, the upper frame 23 can be made in a die by extruding aluminum.

The upper frame 23 can comprise a plurality of second profiled segments 31, connected to each other by suitable connectors, or angular inserts, not shown.

According to some embodiments, the base body 14 comprises a lower sheet or plate 35, and an upper sheet or plate 36.

According to some embodiments, the upper sheet 36 and/or the lower sheet 35 are made of metal.

The lower metal sheet 35 and the upper metal sheet 36, together with the base body 14, define a first chamber 38 in which the filling element 20 can be provided.

According to some embodiments, the lower shell frame 22 surrounds and supports the lower metal sheet 35, which can be disposed aligned with the upper surface of the box-like portion 24a.

According to some embodiments, the upper frame 23 comprises a housing seating 37, in which the perimeter edge of the upper metal sheet 36 can be inserted.

In accordance with other embodiments, the upper frame 23 is provided with recesses and protrusions suitable to define at least one abutment edge 34 for the photovoltaic panel 18, if present, or for the glass panel 19, depending on the type of modular panel 10 to be obtained.

The upper frame 23 thus acts as a support and spacer element, defining between the photovoltaic panel 18 or glass panel 19, and the upper metal sheet 36, a second chamber 39 suitable to contain at least the thermal solar panel 16.

According to possible embodiments, the filling element 20 can be made by polyurethane foaming inside the first chamber 38. In this way, as well as acting as an insulator, the filling element 20 also functions as an adhesive between the parts that make up the base body 14.

According to some embodiments, an insulating profile 40 is provided between the lower shell frame 22 and the upper frame 23.

In one embodiment, the insulating profile 40 is made of plastic material.

The insulating profile 40 can be anchored on one side to the upper edge 22b of the lower shell frame 22, and on the other side to the lateral edge 23b of the upper frame 23, so as to prevent direct contact between the two lower and upper frames 22, 23.

The insulating profile 40 is suitable to carry out a plurality of functions. In particular, it can be configured to thermally insulate the internal environment and the external environment, preventing the formation of thermal bridges, and at the same time allow the absorption of the thermal expansions of the lower shell frame 22 and of the upper frame 23, made of aluminum, due to the difference in temperature between the external and internal environment. Moreover, the insulating profile 40 can facilitate the exit of the air, and therefore a complete filling of the first chamber 38, during the foaming step of the polymer material.

In accordance with other embodiments, the modular panel 10 can comprise another insulating element 21 disposed between the thermal solar panel 16 and the upper metal sheet 36.

In accordance with some embodiments, the insulating element 21 can be made of a rock wool mat, of a thickness suitable to heat insulate the upper metal sheet 36 from the heat absorbed and supplied by the thermal solar panel 16.

According to some embodiments, the lower plate 35, the upper plate 36 and possibly the lower shell frame 22 are provided with first holes 42 and second holes 43 which can cooperate with the circuit connection means 29.

According to some embodiments, the circuit connection means 29 comprise first 44 and second 45 connection pipes, respectively suitable for the passage of the hydraulic circuit 15 and the electric circuit 17, disposed inside the respective first holes 42 and second holes 43.

The first holes 42 and the second holes 43 are advantageously provided in correspondence with the corners of the base body 14, or in any case disposed near the perimeter, so as to facilitate assembly and possible maintenance of the modular panel 10.

The connection pipes 44, 45 can be positioned before the polymer material is foamed to obtain the filling element 20, so as to define a passage for the electric circuit 17 and/or hydraulic circuit 15 through it. In this way, moreover, the polymer material surrounds the connection pipes 44, 45 and integrates them with the base body 14, increasing the stability of the modular panel 10.

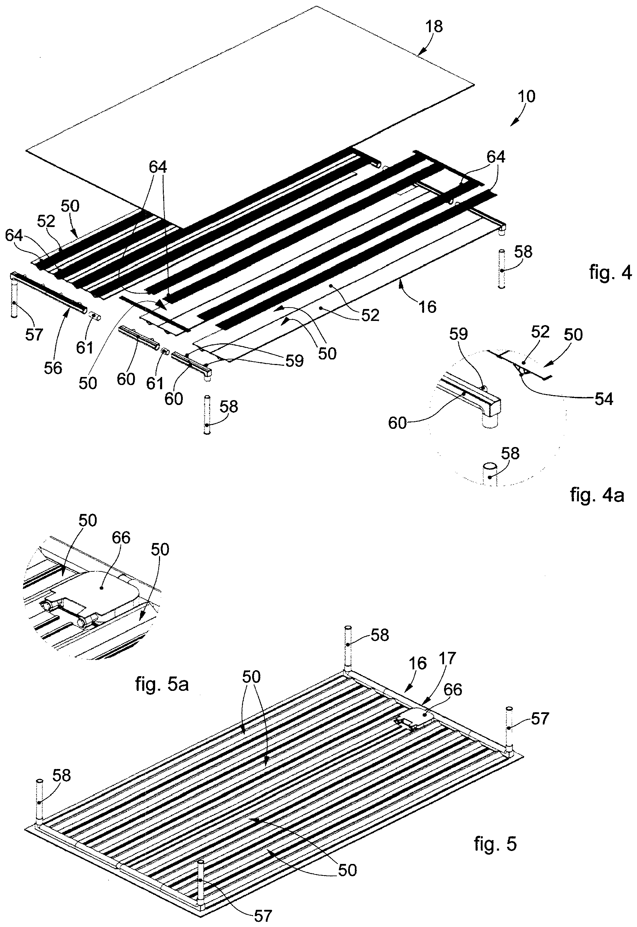

In accordance with embodiments described with reference to figs. 4 and 5, the thermal solar panel 16 comprises a plurality of capturing join profiles 50, substantially rectangular in shape, with a development mainly in a longitudinal direction, able to be connected to one another.

In accordance with some embodiments, the join profiles 50 have an upper flat surface 52, facing upward, during use, that is, toward the external environment.

According to some embodiments, the flat surface 52 can be treated with an absorbing pigment, so as to increase the capacity of the thermal solar panel 16 to absorb solar energy. This can be particularly advantageous, for example, in the case of a modular panel 10 provided with only the thermal solar panel 16, and without the photovoltaic panel 18.

The join profiles 50 also have, on the side opposite the flat surface 52, a tubular cavity 54 that extends longitudinally for the entire development of the join profile 50, inside which the heat-carrier fluid of the circuit hydraulic 15 is able to flow.

The heat-carrier fluid, for example, can be water, which heats up during its transit in the tubular cavity 54, so as to provide hot water suitable for heating to the hydraulic circuit of the building 12 on which the modular panels 10 are mounted.

In accordance with some embodiments, the thermal solar panel 16 is provided with collector tubes 56 disposed at the ends of the join profiles 50, and configured to connect each end of the tubular cavities 54 on one side to a delivery pipe 57, and on the other side to a return pipe 58 of the hydraulic circuit 15.

The collector tubes 56 are provided with delivery/introduction mouths 59, suitable to be inserted and to couple with the ends of the tubular cavities 54 of the join profiles.

According to possible solutions, described by way of example with reference to figs. 4 and 4a, the collector tubes 56 can be made with a plurality of tubular segments 60, provided with the introduction/delivery mouths 59, connected to each other by connection pipes 61.

According to possible solutions, the tubular segments 60 can be made of die-cast aluminum elements.

According to other embodiments, the tubular segments 60 can have an internal taper at the point of connection with the connection pipes 61.

The connection pipes 61 can be cylindrical in shape, and of sizes suitable to be introduced and clamped in the internal taper of the tubular segments 60.

The modular construction of the join profiles and of the respective collector tubes 56 allows to produce thermal solar panels 16, and therefore respective modular panels 10, of different shapes and sizes, with minimum modifications.

In order to obtain the desired size of the thermal solar panel 16, it is in fact sufficient to align a plurality of join profiles 50 with one another, and to connect them on one side and the other with the tubular segments 60 and the connection pipes 61 necessary to obtain a collector tube 56 of the desired size.

The size in length of the collector tube 56 is guaranteed by the pressure of all the parts necessary for the desired measurement.

In accordance with embodiments described with reference to figs. 4 and 5, in the case of a modular panel 10 of the hybrid type, that is, provided with both a thermal solar panel 16 and a photovoltaic panel 18, the latter can be put in contact with and connected to the thermal solar panel 16 itself.

According to possible solutions, an adhesive layer 64 can be applied to the flat surfaces 52, by means of which the photovoltaic panel 18 is glued to the thermal solar panel 16.

According to possible embodiments, the adhesive layer 64 can be obtained by bands of double-sided adhesive tape, glued onto each flat surface 52 of the join profiles 50 and onto the photovoltaic panel 18.

According to some embodiments, the double-sided adhesive layer can advantageously be made of a heat conductive material, for example butyl tape, which, as well as joining the thermal solar panel 16 and the photovoltaic panel 18 together, increases the transmission of heat from the photovoltaic panel 18 to the panel solar heat 16, so as to make the solar heat yield of the modular panel 10 more efficient.

According to these embodiments, it can be provided that the join profiles 50 are shaped in such a way as to define a housing compartment for an electric box 66 of the photovoltaic panel 18, connected to the electric circuit 17.

The particular shape of the thermal solar panel 16 and the use of the adhesive layer 64 makes assembly of the modular panel 10 particularly simple.

According to some embodiments, firstly the thermal solar panel 16 is installed in the second chamber 39 inside the base body 14, above the upper metal sheet 36, then the heat-conducting double-sided adhesive is applied to define the adhesive layer 64, and finally the photovoltaic panel 18 is rested on it and glued, which is inserted in the abutment edge 34 of the upper frame 23.

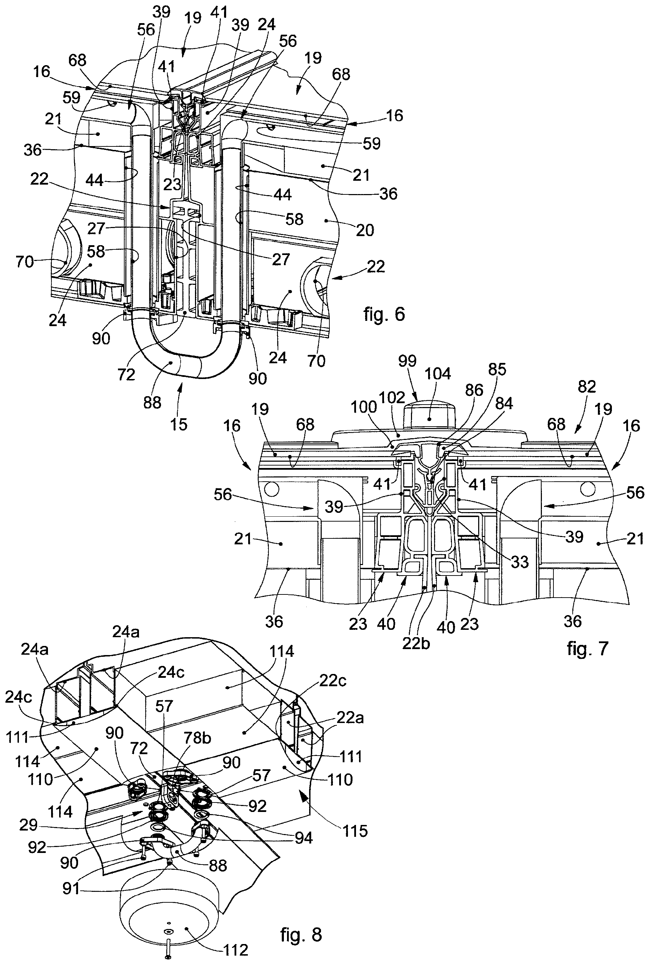

In accordance with embodiments shown by way of example in fig. 6, in the case where only the thermal solar panel 16 is present, the glass panel 19 is provided above it.

According to some embodiments, the glass panel 19 is advantageously disposed distanced from the flat surface 52, supported by the abutment edge 34 of the upper frame 23, which therefore acts as a spacer, so as to define an interspace 68 with the latter. The glass panel 19 thus creates a "greenhouse effect" inside the interspace 68, increasing the heat absorption by the thermal solar panel 16.

Embodiments described here also concern a covering structure 11 comprising a plurality of modular panels 10 disposed adjacent to one another, connected by means of the structural connection means 28 and the circuit connection means 29.

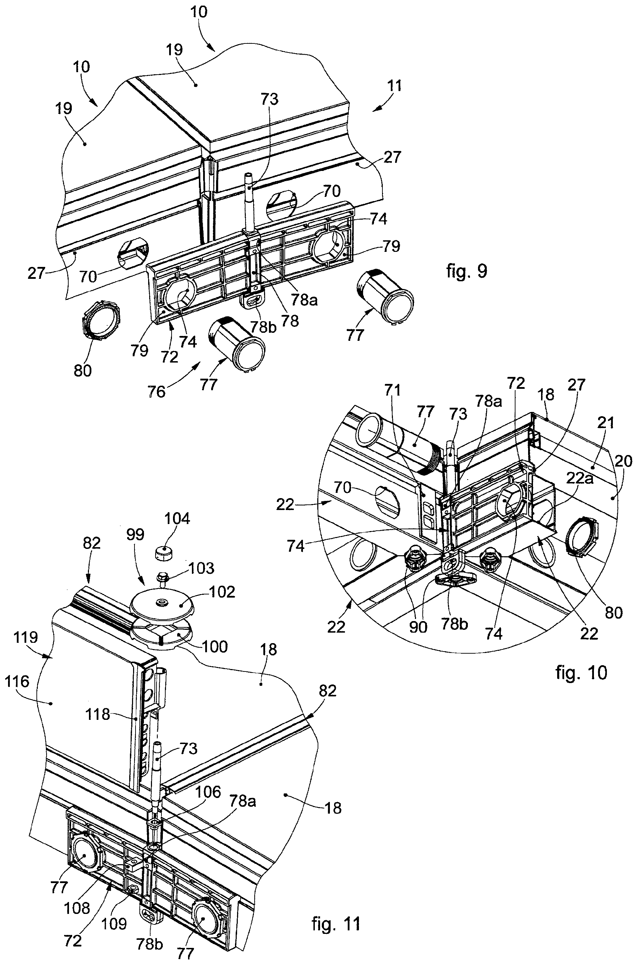

According to embodiments described with reference to figs. 9-11, the structural connection means 28 comprise first apertures 70 made in the lower shell frame 22, and in particular in the box-like portion 22a, which allow it to be passed through in a transverse direction.

The structural connection means 28 can also comprise at least one connection plate 72 cooperating with at least two modular panels 10 and provided with second apertures 74 able to be aligned with one or more of the first apertures 70, so that, by suitable attachment means 76 cooperating with the first apertures 70 and second apertures 74, each connection plate 72 renders at least two modular panels 10 integral with each other.

The presence of the connection plate 72 defines a simple and functional configuration, which confers high self-supporting characteristics on the structure, at the same time facilitating and accelerating the assembly, disassembly and/or maintenance operations of the structure.

According to some embodiments, the connection plate 72 has a profile, bulk and weight which lead to advantages with regard to both the manufacturing costs and the assembly times of the structure. For example, the connection plate can be made of aluminum.

The connection plate 72 preferably has a shape mating with the housing seatings 27 defined by the upper edges 22b of the lower shell frames 22 of the two modular panels 10, and is able to be inserted therein, so as to form a single block. In this way, the loads that the modular panel 10 has to support are distributed on the housing seating 27 and on the connection plate 72.

The connection plate 72 can comprise a central body 78, suitable to be positioned in the housing seating 27, and respective lateral wings 79 each associated with a respective modular panel 10 and provided with at least a second aperture 74.

According to some embodiments, the connection plate 72 can be straight, that is, with the lateral wings 79 parallel to one another, so as to define a covering structure 11 of the sloping type.

According to possible variants, the connection plate 72 can provide the lateral wings 79 inclined with respect to the central body 78, so as to provide a vault-type covering structure 11.

According to some embodiments, a pin 73 can be attached to the connection plates 72, which abuts in a nut 109 inserted in a window 78a of the plate 72. The pin 73 and the nut 109 are inserted and wrapped in plastic elements 106, 108 so as to eliminate any possible thermal bridges.

According to possible solutions, the attachment means 76 comprise elongated elements 77, preferably metal and hollow, and clamping members 80 acting on the elongated elements 77 to clamp them in the desired positions, obtaining a stable connection between two adjacent modular panels 10.

According to some embodiments, the clamping members 80 have the sole function of holding the parts together and are not stressed by the weight to which the modular panels 10 are subjected.

According to other embodiments, the clamping members 80 comprise ring nuts having the supporting surface serrated, so as to prevent the elongated elements 77 from unscrewing.

In accordance with embodiments described with reference to fig. 7, between two adjacent modular panels 10, the packing means 82 are provided, inserted between the upper profiles 23 of two adjacent modular panels 10, and able to prevent infiltration of water or dirt between them.

The packing means 82 can comprise a sealing body 84, having a shape mating with the housing compartment 33 defined between the upper profiles 23, advantageously made of rubber or plastic material, so as to be able to deform and assume the shape suitable to close the housing compartment 33 between adjacent modular panels 10, and defining a hermetic seal of the covering structure 11.

According to some embodiments, the sealing body 84 can be made of polyvinylchloride (PVC), which can also function as a heat insulator with the outside.

According to other embodiments, the packing means 82 can comprise a closing element 86, which can be made of aluminum, T-shaped, suitable to be positioned with the horizontal segment of the T on the edges of the two adjacent modular panels 10, and to couple by means of the stem with the sealing body 84.

According to other embodiments, between the closing element 86 and the modular panels 10, rubber or sponge seals 85 can be provided, which are partly crushed when the closing element is coupled with the sealing body 84, guaranteeing the hermetic seal of the packing means 82.

Depending on the type of modular panel 10 to be made, the packing means 82 can have different shapes. The height of the external surface of the modular panel 10 itself (defined by the glass panel 19, or by the photovoltaic panel 18), is kept constant by a thickness 41 inserted in the abutment edge 34 of the upper profile 23, so as to have packing means 82 which always work in the same way, guaranteeing the desired seal.

According to some embodiments, at the ends, the packing means 82 are completed by central plugs 99 which cooperate with the pins 73 of the connection plates 72. The central plugs 99 have an aluminum cover 102 and a rubber packing 100 which abut with the packing means 82.

The cover 102 can be coupled and closed on the rubber packing 100 by closing a screw 103 which is inserted into the pin 73 of the connection plate 72.

According to other embodiments the screws 103 are covered by caps 104 made of plastic material such as rubber for example.

When it comes into contact with the external surfaces of the modular panel 10, the rubber packing 100 of the central cap 99 is partly crushed, thus guaranteeing the hermetic seal and preventing infiltration of water or dirt even at the angular connection points between modular panels 10.

In accordance with embodiments described with reference to fig. 11, the packings cooperate with metal sheets of lateral protection 116 inserted in lateral support elements 118, in turn inserted into the pin 73 of the plate 72.

In accordance with embodiments described with reference to figs. 6-8, the circuit connection means 29 also comprise connection pipes 88, of the U-shaped type, connected at one end to a delivery pipe 57 and at the opposite end to a return pipe 58 by means of positioning and clamping flanges 90.

The positioning and clamping flanges 90 can be inserted during the construction step on the U-shaped tube, and attached to the base body 14 of the modular panel 10 by means of suitable attachment members 91 of a known type, for example screws, which abut in nuts inserted into the structural corner elements 26.

According to some embodiments, the circuit connection means 29 also comprise crescent-shaped packings 92, configured to hold the head of the connection pipe 88 in position.

According to some embodiments, the crescent-shaped packings 92 can be inserted in pairs in a first hole 42 of the lower shell frame 22, and clamped, by means of same-shape coupling, between the first hydraulic connection pipes 44 and the structural corner element 26.

The crescent-shaped packings 92 can be made of a material similar to that of the structural corner elements 26 in which they are inserted, for example PBT, possibly reinforced with glass fiber.

Additional ring-type packings 94 can also be provided, disposed between the crescent-shaped packings 92 and the end of the connection pipe 88, optionally suitably flattened and widened.

According to embodiments described with reference to fig. 8, lower protection elements 115 can be provided for the longitudinal housing seatings 27 between modular panels 10, for the electric connection cables, for the connection plates 72, the connection pipes 61, and possible elements disposed in correspondence with the joining corners.

The lower protection elements 115 can comprise cables protection metal sheets 114, and longitudinal metal sheets 110, mounted on the lower lateral edges 22c of the lower shell frame 22 of two adjacent modular panels 10, to cover and protect the joining zones between adjacent modular panels 10 in the lower part.

According to some embodiments, the lower protection elements 115 also comprise a central protection element 112, disposed in correspondence with the intersection of four adjacent modular panels 10.

The central protection element 112 can be attached with a screw to the threaded seating present in a protuberance 78b of the connection plate 72.

According to other embodiments, the lower protection elements 115 can define housing compartments for insulating elements such as, for example, rock wool panels 111.

It is clear that modifications and/or additions of parts can be made to the modular panel 10 as described heretofore, without departing from the field and scope of the present invention.

It is also clear that, although the present invention has been described with reference to some specific examples, a person of skill in the art shall certainly be able to achieve many other equivalent forms of modular panel 10, having the characteristics as set forth in the claims and hence all coming within the field of protection defined thereby.

## Claims

1. Modular panel to make covering structures (11) for a building (12), comprising a base body (14) and at least one of either a glass panel (19), a thermal solar panel (16) provided with a hydraulic circuit (15) with a capturing surface, inside which a heat-carrier fluid can flow, and a photovoltaic panel (18) provided with an electric circuit (17) suitable to absorb solar energy and convert it into electric energy, supported by said base body (14),
**characterized in that** said base body (14) comprises a lower shell frame (22) comprising profiled segments (24) and an upper frame (23) comprising profiled segments (31), said upper frame (23) being installed above said lower frame (22), wherein said base body (14) also comprises a lower metal sheet (35) and an upper metal sheet (36), supported by and respectively connected to said lower shell frame (22) and upper frame (23), so that said upper (36) and lower (35) metal sheets define between them a first chamber (38) suitable to contain at least a filling element (20),
wherein said lower shell frame (22) is adapted to cooperate with structural connection means (28) configured to connect said modular panel to one or more adjacent modular panels, and is adapted to cooperate with circuit connection means (29) for said hydraulic circuit (15) and electric circuit (17),
and wherein said upper frame (23) comprises an abutment edge (34) able to support said photovoltaic panel (18) or said glass panel (19), defining between said photovoltaic panel (18) or said glass panel (19), and said upper metal sheet (36) a second chamber (39) suitable to contain at least said thermal solar panel (16).

2. Modular panel as in claim 1, **characterized in that** said thermal solar panel (16) comprises a plurality of join profiles (50) with a main development in a longitudinal direction, connected to each other by collector tubes (56) for connection with said hydraulic circuit (15).

3. Modular panel as in claim 2, **characterized in that** said join profiles (50) have an upper flat surface (52), suitable to capture and absorb solar energy, and a tubular cavity (54) below said flat surface (52) inside which said heat-carrier fluid is able to flow.

4. Modular panel as in any claim from 1 to 3, **characterized in that** said photovoltaic panel (18) and said thermal solar panel (16) are connected to each other by an adhesive layer (64) made of heat-conductive material.

5. Modular panel as in any claim hereinbefore, **characterized in that** said filling element (20) is made of polyurethane foam.

6. Modular panel as in any claim hereinbefore, **characterized in that** said profiled segments (24) of said lower shell frame (22) and said profiled segments (31) of said upper frame (23) are connected to each other by respective connection elements (25, 26, 32) also suitable to eliminate thermal bridges.

7. Modular panel as in any claim hereinbefore, **characterized in that** between said lower shell frame (22) and said upper frame (23) an intermediate profile (40) is provided, made of plastic material, suitable to eliminate thermal bridges, to function as a heat insulation, and to absorb the thermal expansions of said lower shell frame (22) and upper frame (23).

8. Modular panel as in any claim hereinbefore, **characterized in that** said lower shell frame (22) comprises a box-like portion (22a) suitable to house inside it both cables of said electric circuit (15) and pipes of said hydraulic circuit (17).

9. Covering structure for a building (12), **characterized in that** it comprises a plurality of modular panels (10) as in any claim from 1 to 8, connected to each other by said structural connection means (28), in which the lower shell frame (22) of said modular panels (10) is shaped externally with recesses and protrusions such as to define, together with a mating lower shell frame (22) of a second, adjacent modular panel (10), housing seatings (27) suitable to cooperate with said structural connection means (28), and such that the latter are disposed partly in the housing seating (27) of the first modular panel (10), and partly in the housing seating (27) of the second modular panel (10).

10. Covering structure as in claim 9, **characterized in that** the upper frame (23) of said modular panels (10) is shaped so as to define, together with a mating upper frame (23) of a second, adjacent modular panel (10), or together with lateral protection elements (119), a housing compartment (33) suitable to cooperate with packing means (82) configured to be inserted into said housing compartment (33).

11. Covering structure as in claim 9, **characterized in that** the lower shell frame (22) of said modular panels (10) is shaped so as to define, together with a mating lower shell frame (22) of a second, adjacent modular panel (10), lower protruding edges (22c) suitable to cooperate with lower protection elements (115) configured to be attached to said lower protruding edges (22c).

## Patentansprüche

1. Modulare Platte zur Herstellung von Abdeckstrukturen (11) für ein Gebäude (12), umfassend einen Grundkörper (14) und zumindest eine bzw. eines von entweder einer Glasscheibe (19), einem thermischen Solarpaneel (16), das mit einem Hydraulikkreis (15) mit einer Einfangfläche versehen ist, innerhalb dessen ein Wärmeträgerfluid fließen kann, und einem Photovoltaikpaneel (18), das mit einem elektrischen Stromkreis (17) versehen ist, der dafür geeignet ist, Sonnenenergie zu absorbieren und sie in elektrische Energie umzuwandeln, der von dem Grundkörper (14) gestützt ist,
**dadurch gekennzeichnet, dass** der Grundkörper (14) einen unteren Schalenrahmen (22), der Profilsegmente (24) aufweist, und einen oberen Rahmen (23), der Profilsegmente (31) aufweist, umfasst, wobei der obere Rahmen (23) über dem unteren Rahmen (22) installiert ist, worin der Grundkörper (14) auch eine untere Metallfolie (35) und eine obere Metallfolie (36) umfasst, die von dem unteren Schalenrahmen (22) bzw. dem oberen Rahmen (23) unterstützt sind bzw. damit verbunden sind, so dass die obere (36) und die untere (35) Metallfolie dazwischen eine erste Kammer (38) definieren, die dafür geeignet ist, zumindest ein Füllelement (20) zu enthalten,
worin der untere Schalenrahmen (22) dazu geeignet ist, mit strukturellen Verbindungselementen (28) zusammenzuarbeiten, die dafür ausgelegt sind, um die modulare Platte mit einer oder mehreren angrenzenden modularen Platten zu verbinden, und dazu geeignet ist, mit Kreisanschlussmitteln (29) für den Hydraulikkreis (15) und für den elektrischen Stromkreis (17) zusammenzuarbeiten,
und worin der obere Rahmen (23) eine Anschlagkante (34) umfasst, die das Photovoltaikpaneel (18) oder die Glasscheibe (19) stützen kann, indem sie zwischen dem Photovoltaikpaneel (18) oder der Glasscheibe (19) und der oberen Metallfolie (36) eine zweite Kammer (39) definiert, die dazu geeignet ist, zumindest das thermische Solarpaneel (16) zu enthalten.

2. Modulare Platte nach Anspruch 1, **dadurch gekennzeichnet, dass** das thermische Solarpaneel (16) eine Vielzahl von Fugenprofilen (50) mit einem Hauptverlauf in einer Längsrichtung umfasst, die miteinander durch Sammelrohre (56) zur Verbindung mit dem Hydraulikkreis (15) verbunden sind.

3. Modulare Platte nach Anspruch 2, **dadurch gekennzeichnet, dass** die Fugenprofile (50) eine obere ebene Fläche (52), die dazu geeignet ist, Sonnenenergie einzufangen und zu absorbieren, und einen rohrförmigen Hohlraum (54) unter der ebenen Fläche (52) aufweisen, innerhalb dessen das Wärmeträgerfluid fließen kann.

4. Modulare Platte nach einem der Ansprüche 1 bis 3, **dadurch gekennzeichnet, dass** das Photovoltaikpaneel (18) und das thermische Solarpaneel (16) durch eine Klebstoffschicht (64) aus wärmeleitendem Material miteinander verbunden sind.

5. Modulare Platte nach einem der vorhergehenden Ansprüche, **dadurch gekennzeichnet, dass** das Füllelement (20) aus Polyurethanschaum besteht.

6. Modulare Platte nach einem der vorhergehenden Ansprüche, **dadurch gekennzeichnet, dass** die Profilsegmente (24) des unteren Schalenrahmens (22) und die Profilsegmente (31) des oberen Rahmens (23) durch jeweilige Verbindungselemente (25, 26, 32) miteinander verbunden sind, die auch dazu geeignet sind, Wärmebrücken zu beheben.

7. Modulare Platte nach einem der vorhergehenden Ansprüche, **dadurch gekennzeichnet, dass** zwischen dem unteren Schalenrahmen (22) und dem oberen Rahmen (23) ein Zwischenprofil (40), aus Kunststoff, vorgesehen ist, das dazu geeignet ist, Wärmebrücken zu beheben, als Wärmeisolierung zu dienen, und die Wärmeausdehnungen des unteren Schalenrahmens (22) und des oberen Rahmens (23) aufzunehmen.

8. Modulare Platte nach einem der vorhergehenden Ansprüche, **dadurch gekennzeichnet, dass** der untere Schalenrahmen (22) einen kastenförmigen Abschnitt (22a) umfasst, der dazu geeignet ist, in seinem Inneren beide Kabel des elektrischen Stromkreises (17) und Rohrleitungen des Hydraulikkreises (15) unterzubringen.

9. Abdeckstruktur für ein Gebäude (12), **dadurch gekennzeichnet, dass** sie eine Vielzahl von modularen Platten (10) nach einem der Ansprüche 1 bis 8 umfasst, die durch die strukturellen Verbindungselemente (28) miteinander verbunden sind, worin der untere Schalenrahmen (22) der modularen Platten (10) außen mit Aussparungen und Vorsprüngen ausgestaltet ist, so dass er, zusammen mit einem passenden unteren Schalenrahmen (22) einer zweiten, angrenzenden modularen Platte (10), Gehäusesitze (27) definiert, die dazu geeignet sind, mit den strukturellen Verbindungselementen (28) zusammenzuarbeiten, und so dass diese letztgenannten teilweise im Gehäusesitz (27) der ersten modularen Platte (10) und teilweise im Gehäusesitz (27) der zweiten modularen Platte (10) angeordnet sind.

10. Abdeckstruktur nach Anspruch 9, **dadurch gekennzeichnet, dass** der obere Rahmen (23) der modularen Platten (10) so ausgestaltet ist, dass er, zusammen mit einem passenden oberen Rahmen (23) einer zweiten, angrenzenden modularen Platte (10), oder zusammen mit seitlichen Schutzelementen (119), einen Gehäuseraum (33) definiert, der dazu geeignet ist, mit Abdichtungsmitteln (82) zusammenzuarbeiten, die dafür ausgelegt sind, um in den Gehäuseraum (33) hinein eingefügt zu werden.

11. Abdeckstruktur nach Anspruch 9, **dadurch gekennzeichnet, dass** der untere Schalenrahmen (22) der modularen Platten (10) so ausgestaltet ist, dass er, zusammen mit einem passenden unteren Schalenrahmen (22) einer zweiten, angrenzenden modularen Platte (10), untere vorspringende Kanten (22c) definiert, die dazu geeignet sind, mit unteren Schutzelementen (115) zusammenzuarbeiten, die dafür ausgelegt sind, um an den unteren vorspringenden Kanten (22c) angebracht zu werden.

## Revendications

1. Panneau modulaire pour réaliser des structures de couverture (11) pour un bâtiment (12), comprenant un corps de base (14) et au moins l'un parmi un panneau en verre (19), un panneau solaire thermique (16) pourvu d'un circuit hydraulique (15) avec une surface de capture, à l'intérieur de laquelle peut s'écouler un fluide caloporteur, et un panneau photovoltaïque (18) pourvu d'un circuit électrique (17) apte à absorber l'énergie solaire et la convertir en énergie électrique, supporté par ledit corps de base (14), **caractérisé en ce que** ledit corps de base (14) comprend un cadre de coque inférieur (22) comprenant des segments profilés (24) et un cadre supérieur (23) comprenant des segments profilés (31), ledit cadre supérieur (23) étant installé au-dessus dudit cadre inférieur (22), où ledit corps de base (14) comprend aussi une tôle métallique inférieure (35) et une tôle métallique supérieure (36), supportées par et respectivement reliées audit cadre de coque inférieur (22) et au cadre supérieur (23), de sorte que ladite tôle métallique supérieure (36) et inférieure (35) définissent entre elles une première chambre (38) apte à contenir au moins un élément de remplissage (20),
où ledit cadre de coque inférieur (22) est apte à coopérer avec des moyens de connexion structurelle (28) configurés pour connecter ledit panneau modulaire à un ou plusieurs panneaux modulaires adjacents, et est apte à coopérer avec des moyens de connexion de circuit (29) pour ledit circuit hydraulique (15) et circuit électrique (17),
et où ledit cadre supérieur (23) comprend un bord de butée (34) apte à supporter ledit panneau photovoltaïque (18) ou ledit panneau en verre (19), définissant entre ledit panneau photovoltaïque (18) ou ledit panneau en verre (19), et ladite tôle métallique supérieure (36) une deuxième chambre (39) apte à contenir au moins ledit panneau solaire thermique (16).

2. Panneau modulaire selon la revendication 1, **caractérisé en ce que** ledit panneau solaire thermique (16) comprend une pluralité de profils de jonction (50) avec un développement principal dans une direction longitudinale, connectés les uns aux autres par des tubes collecteurs (56) pour une connexion avec ledit circuit hydraulique (15).

3. Panneau modulaire selon la revendication 2, **caractérisé en ce que** lesdits profils de jonction (50) ont une surface plate supérieure (52), apte à capter et absorber l'énergie solaire, et une cavité tubulaire (54) au-dessous de ladite surface plate (52) à l'intérieur de laquelle ledit fluide caloporteur peut s'écouler.

4. Panneau modulaire selon l'une quelconque des revendications de 1 à 3, **caractérisé en ce que** ledit panneau photovoltaïque (18) et ledit panneau solaire thermique (16) sont connectés l'un à l'autre par une couche adhésive (64) en matériau thermoconducteur.

5. Panneau modulaire selon l'une quelconque des revendication ci-dessus, **caractérisé en ce que** ledit élément de remplissage (20) est en mousse de polyuréthane.

6. Panneau modulaire selon l'une quelconque des revendications ci-dessus, **caractérisé en ce que** lesdits segments profilés (24) dudit cadre de coque inférieur (22) et lesdits segments profilés (31) dudit cadre supérieur (23) sont connectés les uns aux autres par des respectifs éléments de connexion (25, 26, 32) apte aussi à éliminer les ponts thermiques.

7. Panneau modulaire selon l'une quelconque des revendications ci-dessus, **caractérisé en ce qu'**entre ledit cadre de coque inférieur (22) et ledit cadre supérieur (23) est prévu un profil intermédiaire (40), en matière plastique, apte à éliminer les ponts thermiques, à fonctionner en tant que isolation thermique et à absorber les dilatations thermiques dudit cadre de coque inférieur (22) et cadre supérieur (23).

8. Panneau modulaire selon l'une quelconque des revendications ci-dessus, **caractérisé en ce que** ledit cadre de coque inférieur (22) comprend une portion en forme de boîte (22a) apte à loger à l'intérieur les câbles dudit circuit électrique (15) et des tuyaux dudit circuit hydraulique (17).

9. Structure de couverture pour un bâtiment (12), **caractérisée en ce que** elle comprend une pluralité de panneaux modulaires (10) selon l'une quelconque des revendications de 1 à 8, connectés les uns aux autres par lesdits moyens de connexion structurelle (28), où le cadre de coque inférieur (22) desdits panneaux modulaires (10) est formé extérieurement avec des creux et des saillies de manière à définir, conjointement avec un cadre de coque inférieur de couplage (22) d'un deuxième panneau modulaire (10) adjacent, des sièges de logement (27) apte à coopérer avec lesdits moyens de connexion structurelle (28), et tels que ceux-ci sont disposés en partie dans le siège de logement (27) du premier panneau modulaire (10), et en partie dans le siège de logement (27) du deuxième panneau modulaire (10).

10. Structure de couverture selon la revendication 9, **caractérisée en ce que** le cadre supérieur (23) desdits panneaux modulaires (10) est conformé de manière à définir, conjointement avec un cadre supérieur de couplage (23) d'un deuxième panneau modulaire (10) adjacent, ou conjointement avec des éléments de protection latéraux (119), un compartiment de logement (33) apte à coopérer avec des moyens d'emballage (82) configurés pour être insérés dans ledit compartiment de logement (33).

11. Structure de couverture selon la revendication 9, **caractérisée en ce que** le cadre de coque inférieur (22) desdits panneaux modulaires (10) est formé de manière à définir, conjointement avec un cadre de coque inférieur de couplage (22) d'un deuxième panneau modulaire (10) adjacent, des bords saillants inférieurs (22c) aptes à coopérer avec des éléments de protection inférieurs (115) configurés pour être fixés auxdits bords saillants inférieurs (22c).
